# EUROPEAN PATENT APPLICATION

(11) **EP 2 544 157 A1**
(43) Date of publication of application: **09.01.2013**
(21) Application number: 11172482.9
(22) Date of filing: 04.07.2011
(51) Int. Cl.: G08B 13/02

(54) **Technique for intrusion detection**

(71) Applicant: ZF Friedrichshafen AG, 88038 Friedrichshafen (DE)
(72) Inventor: Wilhelm, Siegrfried E., 82131 Stockdorf (DE)

(57) **Abstract**

A device (100) for intrusion detection is provided. The device comprises a housing (102), a controller (230), and one or more foils (220; 240; 260a, 260b). The housing defines an interior (280; 282). The controller is located in the interior. Each of the one or more foils includes a surface sensitive to a local action at the sensitive surface. The one or more sensitive surfaces at least partially enclose a volume in the interior. Each of the one or more foils is coupled to the controller and configured to output the signal that depends on a location of the action at the respective sensitive surface.

## Description

### Technical Field

The present disclosure generally relates to the technical field of protecting a volume against intrusion. In particular, the disclosure relates to a device for intrusion detection.

### Background

Modern societies increasingly rely on storing and exchanging information, including sensitive data ranging from private or company level to state level such as bank account data, trade secrets or state secrets. Besides sensitive data that is stored or communicated, an unauthorized third party may target logic comprised in components of an electronic device. E.g., the targeted logic may comprise means for encryption or decryption.

Not only external communication lines are vulnerable to eavesdropping. Risks to communication security resulting from a directly accessible internal bus in an open hardware architecture, such as a personal computer, have been identified. Document EP 0 875 813 B1 considers an enciphering technique for a plurality of data sources and data sinks connected to a network. The data source produces enciphered data using a cryptographic key with which a correct decipherment result is obtained at the data sink applying a first cryptographic key and a second cryptographic key individually to the enciphered data. The decipherment is performed in two subsequent stages, firstly, by an interface connecting the data sink to the network and, secondly, by an application within the data sink. While such enciphering may add to communication security, at least one of the enciphered data, the cryptographic key and the deciphered data remain accessible on a physical layer.

Another technique for reducing the risks of an unauthorized access to internal structure is considered in document US 5,872,560, which describes a security keyboard comprising a thin and elastic security film substantially completely enveloping contacting means to secure the contacting means against unauthorized access. The security film includes an intrusion detection screen with a meander-shaped resistance network of thin meandering conductor paths. The conventional intrusion detection may be associated with an intrusion that remains undetected by short-circuiting a segment of the meandering conductor paths before the intrusion occurs at the short-circuited segment.

### Summary

There is a need for a device that may allow detecting more or some other cases of intrusion.

This need is satisfied by a device for intrusion detection. The device comprises a housing having an interior; a controller located in the interior; and one or more foils, each of which includes a surface sensitive to a local action at the sensitive surface, the one or more sensitive surfaces at least partially enclosing a volume in the interior, wherein each of the one or more foils is coupled to the controller and configured to output a signal that depends on a location of the action at the sensitive surface.

The output signal may be more detailed than a binary signal. The output signal may indicate more than the absence or presence of an action or intrusion. The dependency on the location of the action may prevent or reduce the risk of an undetected short-circuit. An attempt of affixing a short-circuit may be a detected action. A short-circuit affixed to the one or more sensitive surfaces may influence the output signal. The dependency on the location may be directly indicated by the output signal. Alternatively or in addition, the dependency on the location may be encoded in the output signal, and decoding the location may be based on the output signal and an input signal provided to the one or more foils. The input signal may be provided by the controller or a pattern generator. The controller may comprise a comparator. The comparator may compare the output signal with a reference signal or the input signal provided to the one or more foils. The comparator may be adapted to derive the location of the action. The device may monitor the at least partially enclosed volume as to an intrusion attempt.

The device may be a node or terminal in a communication network. The device may be a mobile communication device. Alternatively, the device may be at least temporarily stationary and the volume may comprise one or more communication lines. The housing may be flexible and the device may be integrated in a cable insulation. Alternatively or in addition, the volume may include data processing units.

The housing may be closed. Alternatively, at least one opening may be provided in the housing. Each of the at least one opening may be adapted to receive an interface, a touchpad, or any other component.

The housing may have an inner surface. The interior may encompass a convex hull of the inner surface. Alternatively, the interior may be any connected volume such that there is a point in the volume towards which the volume can be radially contracted without intersecting the housing. The latter definition may include protrusions of the interior at the at least one opening. In the case of a segmented housing, there may be two or more disjoint and/or disconnected interiors. The volume in the interior may encompass the interior entirely or may be a subset of the interior. Each of the one or more foils may be located in the interior. Each of the foils may be located completely inside the interior. Each of the foils may contact the inner surface.

The foil may comprise one or more layers. The one or more layers may have controllable local electrical properties. The electrical properties may include resistivity or capacitance. The one or more layers may be spaced apart. The one or more layers may be elastic. The one or more layers may be configured to come into contact in response to local pressure due to the action.

Each of the one or more sensitive surfaces may be sensitive to an intrusion action at the sensitive surface, on the sensitive surface, or near the sensitive surface. The action may be at least one of an interaction with an intruder, a mechanical interaction, mechanical stress in or at the one or more sensitive surfaces, an approach to one of the one or more sensitive surfaces, a spatial proximity to the one or more sensitive surfaces, strain, deformation, an impact, an electrostatic interaction, a magnetic interaction, an electromagnetic interaction, a change in a capacitance or a capacitive coupling, an electromagnetic induction, a contact, and a rearrangement at the one or more sensitive surfaces. The intruder may be a drill.

The signal may be output to the controller. The one or more foils may be coupled in series, wherein a first foil and a last foil in the series may be directly coupled to the controller. Alternatively or in addition, each of the one or more foils may be separately coupled to the controller.

The location indicated by the output signal may be a location at the one or more sensitive surfaces. The output signal may indicate at which location the intrusion intersects the one or more sensitive surfaces. The indicated location may distinguish two, three or more areas on each of the one or more sensitive surfaces. Each of the distinguished areas may differ from an external shape of the housing. Preferably, an arrangement of the distinguished areas does not correspond to outer faces of the housing. The housing may have a plurality of flat outer faces. A granularity of the indicated location may be finer than the outer faces. The one or more foils may be configured to provide a laterally resolved signal. The output signal may vary essentially continuously with the location of the action.

One or all of the one or more foils may comprise a touch foil. The one or more foils may comprise at least one of a resistive touch foil and a capacitive touch foil. The resistive touch foil may comprise a first resistive layer and a second resistive layer. The layers can be separate sheets or coatings on opposite sides of one substrate. Each of the resistive layers may have an approximately homogeneous electrical resistivity. One or each of the resistive layers may comprise a Transparent Conductive Oxide (TCO) layer spaced apart from and facing towards the other TCO layer. The TCO layer may comprise powder of Indium Tin Oxide (ITO). Alternatively or in addition, one or each of the resistive layers may comprise at least one of Carbon Nanotubes (CNTs) and Graphene.

The output signal may change upon at least one of approach and contact with one of the one or more sensitive surfaces. The signal may change significantly prior to a local destruction of the respective one of the one or more foils. The signal may change prior to a puncture or a cut in the respective one of the one or more foils. The approach of an intruder may be detected by a change in capacitance. The contact of an intruder may be detected by a change in at least one of electrical resistance and capacitance.

The one or more sensitive surfaces may cover the inner surface of the housing. The one or more sensitive surfaces may at least partially or completely cover the inner surface of the housing. The one or more sensitive surface, or the one or more foils, may at least partially or completely contact the inner surface. The foil may be glued to the inner surface. The foil may be positively locked in the housing. Alternatively, each of the one or more sensitive surfaces, or each of the one or more foils, may be spaced apart from the inner surface. Covering the inner surface may encompass that at every point of the inner surface, a normal to the inner surface intersects one of the one or more sensitive surfaces. Alternatively or in addition, covering the inner surface of the housing may encompass that at every point of the sensitive surface, a normal to one of the one or more sensitive surfaces intersects the housing.

The enclosed volume may be completely enclosed by the one or more sensitive surfaces. The volume may be surrounded on all sides by at least one of the one or more sensitive surfaces. Any straight line through a center position within the completely enclosed volume may intersect with at least one of the one or more sensitive surfaces.

The device may further comprise a power supply. The power supply may be arranged in the interior. The power supply may be an autonomous source of power. The power supply may provide electrical power to at least the controller. Alternatively or in addition, the power supply may provide electrical power to each of the one or more foils. The power may be directly supplied to each of the one or more foils. Alternatively, the power may be supplied indirectly via the controller to each of the one or more foils. The power supply may comprise a lithium-ion polymer battery.

The device may further comprise a touchpad. The touchpad may be arranged in the at least one opening of the housing. The touchpad may be externally accessible. The touchpad may be comprised in a touchscreen of the device. One of the one or more foils may be comprised in the touchpad.

The device may further comprise a multiplexer adapted to multiplex a first input and at least one second input to an output of the multiplexer. The controller may be coupled to the output of the multiplexer. The touchpad may be coupled to the first input of the multiplexer. Each of the one or more foils may be coupled to the controller via the at least one second input of the multiplexer.

The touchpad may temporarily or permanently function as part of the enclosure of the volume. The enclosed volume may be incompletely enclosed by the one or more sensitive surfaces. In addition, the enclosed volume may be completely enclosed by the touchpad and the one or more sensitive surfaces.

The device may further comprise a pattern generator. The one or more foils may be coupled to the pattern generator. The pattern generator may be adapted to generate an input signal indicative of the pattern. The input signal may drive or excite the one or more foils. The pattern generator may generate a random pattern. In the absence of the action, there may be no output signal or a constant output signal. Alternatively, in the absence of the action, the output signal may correspond to the input signal. In the presence of the action, the output signal may be a result of a correlation between the input signal and the action. The output signal may be a modification of the input signal depending on the location of the action at the respective sensitive surface. The pattern generator may be coupled to the controller. The controller may derive the location of the action by decorrelating the output signal using the input signal.

The device may further comprise a demultiplexer adapted to demultiplex an input to a first output and at least one second output of the demultiplexer. The pattern generator may be coupled to the input of the demultiplexer. The touchpad may be coupled to the first output of the demultiplexer. Each of the one or more foils may be coupled to the pattern generator via the second output of the demultiplexer.

The one or more foils may include a first foil having a first plane of principal curvature and a second foil having a second plane of principal curvature. The second plane of principal curvature may be essentially perpendicular to the first plane. Alternatively or in addition, the one or more foils may be bended or folded. One or each of the one or more foils may partially overlap with itself. The one or more foils may comprise input contacts and output contacts for the input signal and the output signal, respectively. One or both of the input contacts and the output contacts may be inside the enclosed volume.

The device may further comprise at least one Printed Circuit Board (PCB). The at least one PCB may comprise a first PCB and a second PCB arranged parallel to the first PCB. A side of the at least one PCB facing the housing is also referred to as an outer side. A side of one of the PCBs facing another one of the PCBs is also referred to as an inner side. One or each of the outer sides is unpopulated by electronic components and/or conducting paths. One or each of the inner sides is populated by electronic components and/or conducting paths. Alternatively or in addition, one or each of the PCBs may include at least one of an active filter and one or more dummy conducting paths. One or all of the outer sides may comprise at least one of a shielding layer and a foil. The foil may include a sensitive surface as described above.

The one or more electronic components may include one or more of the controller, the power supply, the pattern generator, the first PCB, the second PCB, and the at least one interface. The controller may be adapted to alter one or all of the electronic components in response to the output signal indicating an intrusion. Alternatively or in addition, the control may be adapted to derive a location of the action from the output signal. The controller may further be adapted to assign the derived location to one or more of the electronic components and to alter the electronic components assigned to the derived location.

The alteration may be a self-destruction. The alteration may comprise at least one of deletion of memory and physical destruction of logic in one or more of the electronic components.

The device may further comprise a shielding layer between the housing and the one or more foils. The shielding layer may be a coating on the inner surface of the housing. The shielding layer may comprise at least one of aluminum, copper, nickel, chromium, carbon and an alloy thereof. The shielding layer may prevent an attack using X-radiation. The shielding layer may be an alloy of chromium and nickel. The housing is preferably made from aluminum. The shielding layer may weaken an external magnetic field. The shielding layer may form a Faraday cage in the interior.

One of the at least one interface of the device may be arranged in an opening of the housing. Each of the at least one interface may include a back cover. The back cover may be made from the same material of the housing. The back cover may electrically contact the housing. The interface may be positively locked in the back cover. The back cover may be positively locked in the housing. The at least one interface may include the touchpad.

The device may further comprise in the interior at least one module. The module may be a further device within the device. The module may comprise any one of the features described above. A structure of the device may at least partially be replicated hierarchically and/or iteratively. The at least one module may comprise a further housing within the interior. The further housing may comprise at least one of a further shielding layer and further one or more foils in a further interior of the further housing. The at least one module may comprise one or more of the electronic components. Each of the controller, the power supply, the pattern generator, the first PCB, the second PCB, and the at least one interface may be comprised in the at least one module.

### Brief Description of the Drawings

In the following, further technical details and advantages will be discussed in connection with exemplary embodiments illustrated in the drawings, wherein:
- Fig. 1: schematically illustrates front and side views of a first embodiment of a device for intrusion detection;
- Fig. 2: schematically illustrates an exploded perspective view of the first embodiment of Fig. 1;
- Fig. 3A: is a schematic cross-section of the first embodiment along a vertical section with respect to Fig. 1;
- Fig. 3B: schematically illustrates a perspective view of an interior of a device for intrusion detection according to a second embodiment;
- Fig. 4: schematically illustrates a relative arrangement of curvature for a pair of foils in the device for intrusion detection in accordance with each of the first embodiment and the second embodiment;
- Fig. 5: is a schematic block diagram of the pair of foils of Fig. 4;
- Fig. 6: schematically illustrates an overlapping arrangement of one of the foils in accordance with each of the first embodiment and the second embodiment;
- Fig. 7A and 7B: schematically illustrate a first definition of the interior and a second definition of the interior, respectively; and
- Fig. 8: is a schematic signaling diagram illustrating three zones in accordance with each of the first embodiment and the second embodiment.

### Detailed Description

In the following description, for purposes of explanation and not limitation, specific details are set forth such as specific device configurations and specific signaling scenarios in order to provide a thorough understanding of the techniques disclosed herein. It will be apparent to one skilled in the art that these techniques may be practiced in other embodiments that depart from these specific details. The skilled artisan will appreciate, for example, that the techniques disclosed herein may be practiced in combination with other configurations and different signaling steps.

Furthermore, while the following embodiments will primarily be described in relation to a mobile device adapted to communicate via a Universal Serial Bus (USB), it will be readily apparent that the technique described herein may also be practiced in a stationary device or a device communicating by means of other wired or wireless interfaces.

Moreover, while the embodiments are primarily described for the case of resistive touch foils, the device can also be implemented using one or more other touch foils. Other touch foils include a capacitive touch foil. Other touch foils further include a matrix approach with a series of conductors arranged in an array of parallel lines in two layers separated by an insulator and crossing each other at right angles to form a grid.

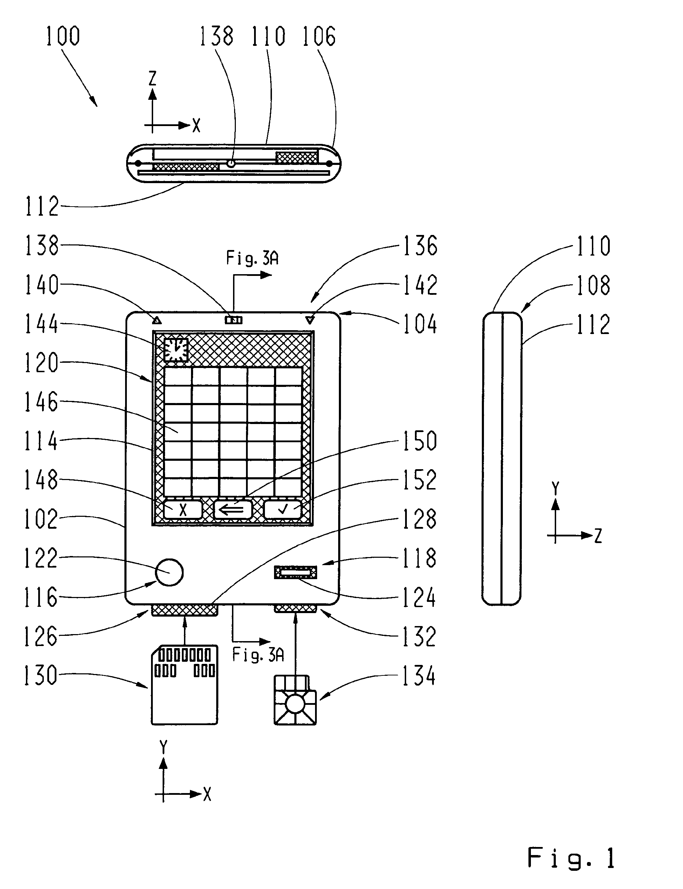

Fig. 1 shows a front view of a first embodiment of a device 100 for intrusion detection. The device comprises a housing 102. A general structure of the housing 102 is a cuboid, all of which edges 104, 106, and 108 are rounded.

More specifically, the housing 102 comprises an upper shell 110 and a subshell 112. The upper shell 110 comprises openings 114, 116, and 118. A touchscreen 120 is arranged in the opening 114. The touchscreen 120 receives a user input. Particularly, the user may input a user identification. A push switch 122 is arranged in the second opening 116. The push switch provides a signal for alternately switching the device 100 between an on-state and an off-state. A fingerprint sensor 124 is arranged in the third opening 118. The fingerprint sensor 124 scans friction ridges of epidermis on the user's finger as a further user identification.

The housing 102 further comprises on a bottom narrow side 126. The bottom narrow side 126 provides a first slot 128 for receiving a Secure Digital (SD) memory card 130 comprising non-volatile memory and a second slot 132 for receiving a microSD High Capacity Card (µSDHC) 134 storing a cryptographic key as a security token. The housing 102 further comprises an upper narrow side 136. A connector 138, a first USB port 140, and a second USB port 142 are provided on the upper narrow side 136. The connector 138 provides the functionality of both a headset connector and a charging connection. The first USB port 140 and the second USB port 142 are restricted to unidirectional communication. The first USB port 140 and the second USB port 142 are restricted to data transmission and data reception, respectively.

In the on-state of the device 100 shown in Fig. 1, the touchscreen 120 displays a real-time clock 144, a matrix 146, and three virtual buttons 148, 150, and 152. The matrix 146 is shown as an array of 5 x 7 elements in 5 columns and 7 rows. The vertical columns and the horizontal rows are also referred to as a first direction and a second direction, respectively. A user may input a passphrase on the matrix 146. The virtual buttons 148, 150, and 152 provide the functionality of cancelling the user input, backspacing the last character of the user input, and confirming the user input, respectively.

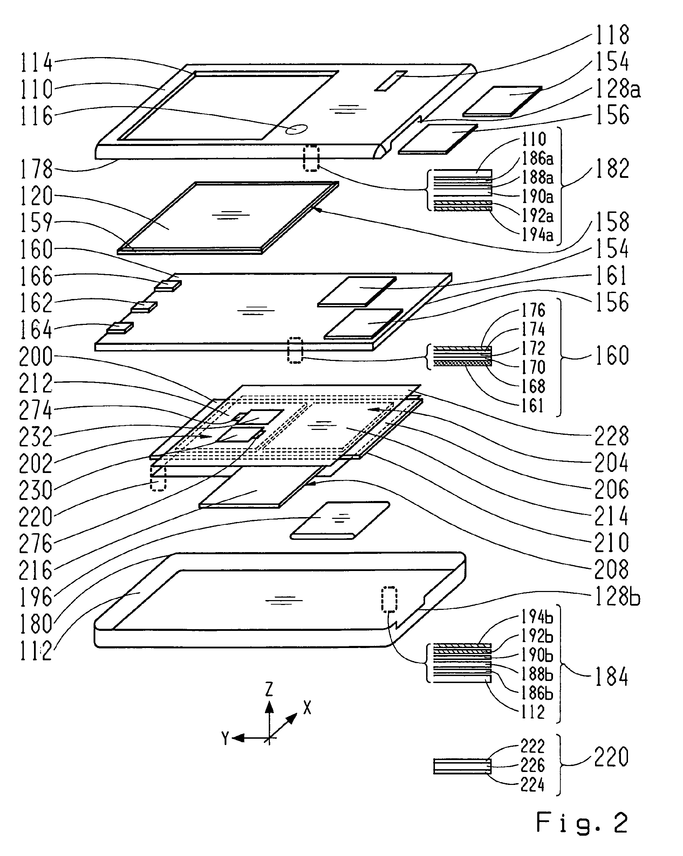

Fig. 2 schematically illustrates an exploded view of the device 100 shown in Fig. 1. Like reference signs are used throughout to denote corresponding features, which description is omitted to avoid redundancy.

The device 100 further comprises a first capsule 154 and a second capsule 156. The capsules 154 and 156 are made from sheet metal. The first capsule 154 comprises a Printed Circuit Board (PCB) populated by the fingerprint sensor 124 and fingerprint interface electronics connected to the fingerprint sensor 124. The second capsule 156 includes a connector for receiving the non-volatile memory cards 130 and 134. The touchscreen 120 is fitted into a back cover 158. The back cover 158 is a cast metal matrix composite. The back cover 158 comprises a circumferential edge 159 for circumferential support at a frame of the first opening 114.

The device 100 further comprises a shielding PCB 160. Mechanical and electronic components of the connector 138, the first USB port 140, and the second USB port 142 are comprised in capsules 162, 164, and 166, respectively. Each of the capsules 154, 156, 162, 164, 166 and the back cover 158 is in form-locking arrangement between the shielding PCB 160 and the upper shell 110.

In a further variant, field emitters are arranged on the shielding PCB 160. The field emitters generate a field in the housing 102. The inner side of the housing 102 poses boundary conditions on the field. A state of the field thus depends on the inner geometry of the housing. A detector is arranged on the shielding PCB 160. The detector detects the state of the field. An intrusion changes the inner geometry of the housing, and thus the state of the field. The detector signals the change of the field, indicating the intrusion, to the module 202. The field comprises at least one of a static electric field component, static magnetic field component, and an electromagnetic field component.

The shielding PCB 160 comprises a substrate layer 168 and a layer structure on the substrate 168 on the side of the substrate 168 directed to the front. The layer structure comprises a shielding layer 170, an insulating layer 172, a first Transparent Conductive Oxide (TCO) foil 174 and a second TCO foil 176. The substrate 168 provides mechanical stiffness to the shielding PCB 160. The shielding layer 170 is made from an alloy of nickel and chromium. The nickel component is sufficiently large such that ferromagnetism of nickel dominates over antiferromagnetism of chromium.

Due to the electrical resistivity of the shielding layer 170, eddy currents are attenuated inside the shielding layer 170. As a result, when exposing the device 100 to a changing magnetic field (due to relative motion or due to time variations of the magnetic field), eddy currents are induced and attenuated in the shielding layer 170. An external magnetic flux is thus attenuated or prevented from penetrating beyond the shielding layer 170. Similarly, a leakage of magnetic fields generated by conducting paths or electronic components inside the housing 102 is prevented.

The shielding layer 170 is formed as a flat metal coating or an integral metal sheet. In a variant of the shielding layer 170, metal components of the shielding layer 170 are woven and laminated, which reduces unwanted heating effects due to the eddy currents. An attack by magnetic induction aiming at overheating the device 100, or at least the shielding layer 170, may thus be thwarted.

Magnetic fields at frequencies up to 1000 Hz are not only attenuated but mainly deflected due to the permeability of the shielding layer 170. Since the permeability of the shielding layer 170 is greater than the permeability of the space between the shielding PCB 160 and the upper shell 110, a magnetic field entering the device 100 through the upper shell 110 is deflected by the shielding layer 170. Magnetic field lines are redirected to be essentially parallel to the shielding layer 170, thus avoiding the space beyond the shielding layer 170. A corresponding shielding arrangement for the subshell 112 is realized by a second shielding PCB 160' described below.

In a more advanced variant, the shielding layer 170 comprises a high-temperature superconducting layer. The superconducting layer is made from Hg₀,₈Tl₀,₂Ba₂Ca₂Cu₃O₈, Bi₂Sr₂Ca₂CU₃O₁₀ (also referred to as Bismuth Strontium Calcium Copper Oxide, or BSCCO), or YBa₂Cu₃O₇ (also referred to as Yttrium Barium Copper Oxide, or YBCO). The device 100 a supervising module (such as module 202 described below) keeps the device 100 in an inoperative state when the shielding layer 170 is above its superconducting transition temperature, preferably when the shielding lay 170 is above the boiling temperature of nitrogen. Below the superconducting transition temperature, magnetic fields originating external to the device 100 are completely expelled due to the Meissner effect.

The pair of TCO foils 174 and 176 is electrically insulated from the shielding layer 170 by the insulating layer 172. The TCO foil 174 is spaced apart from the TCO foil 176, such that the pair of TCO foils 174 and 176 is electrically insulated in a normal operating state free of external forces. The outer second TCO foil 176 is sensitive to an intrusion action. In response to local pressure applied to the outer second TCO foil 176, the resilient TCO foil 176 is locally curved and contacts the inner first TCO foil 174. The pair of TCO foils 174 and 176 forms a first touch foil. The first touch foil is one of a plurality of touch foils in the device 100. The first touch foil is part of a distributed intrusion detection system, as is described in further detail below.

The upper shell 110 and the subshell 112 have circumferential edges 178 and 180, respectively. A circumferential groove and a circumferential tongue are formed at the edges 178 and 180, respectively. The tongue engages with the groove. A pair of notches 128a and 128b in the edges 178 and 180, respectively, provides the slot 128 for inserting and ejecting the non-volatile memory.

The groove comprises two parallel faces extending from the edge 178. A circumferential notch is provided at one of the faces inside the groove. At the tongue, a bulge protrudes perpendicular to the tongue towards the interior. The bulge engages with the notch for a form-locking connection of the upper shell 110 and the subshell 112.

The housing 102 has an inner surface with layer structures 182 and 184 at the upper shell 110 and the subshell 112, respectively. Corresponding layers of the layer structure 182 and 184 are referred to by like reference numbers with "a" and "b" appended thereto, respectively. The housing 102 is made from aluminum. The layer structures 182 and 184 comprise an insulating layer 186a and 186b, respectively, for electrical insulation of inner shielding layers 188a and 188b, respectively, from the housing 102. The inner shielding layers 188a and 188b are made from an alloy of nickel and chromium. Further insulating layers 190a and 190b provide electrical insulation against outer TCO foils 192a and 192b, respectively. Inner TCO foils 194a and 194b interact with the outer TCO foils 192a and 192b, respectively, as a second touch foil and a third touch foil. Configuration and operation of the second and third touch foils is analogous to the first touch foil formed by the TCO foils 174 and 176, as described above.

As pointed out before, each of the housing 102 and the shielding layers 188a, 188b comprise a metal component. The housing 102 and the shielding layers 188a, 188b provide an enclosure with the properties of a Faraday cage. Each of the housing 102 and the shielding layers 188a, 188b attenuates an external electrical field and prevents electrostatic discharge from entering the interior of the device 100.

A lithium-ion polymer battery 196 is arranged in the subshell 112. The battery 196 is rechargeable by a charging current provided at the external connector 138. The battery 196 is wrapped in a metal foil. The metal foil shields electromagnetic radiation emitted from the battery 196 due to a discharging current when the device 100 is in the on-state. The discharging current varies in time. Leakage of sensitive information, which can be encoded in a discharging current and may indicate operations performed in the device 100, is thus prevented.

The most sensitive electronic components requiring the highest level of intrusion protection are arranged in a central position in the interior of the housing 102 between the battery 196 and the shielding PCB 160. A multilayer PCB 200 is located between the battery 196 and the shielding PCB 160. The multilayer PCB 200 comprises modules 202 and 204 arranged on a front side 206 of the multilayer PCB 200. A further module 208 is arranged on a back side 210 of the multilayer PCB 200. Each of the modules 202, 204, and 208 has a casing 212, 214, and 216, respectively. The casings 212, 214, and 216 are formed from sheet metal. Each of the casings 212, 214, and 216 encloses the respective module 202, 204, and 208 on every side, except towards the multilayer PCB 200. The casings 212, 214, 216 are mechanically connected to the multilayer PCB 200 by means of clips attached at the respective side of the multilayer PCB 200. The casings 212, 214, 216 are grounded. A ground potential of the grounding is provided (via the clips) from one of the external connectors 138, 140, 142 during a connected state of the device 100.

The device 100 is portable. When the device 100 is not galvanically connected to a host or any other source of an external reference potential, all shielding layers 170, 188a, 188b of the device 100, the casings 212, 214, 216 of the device 100, and the back cover 158 define a common reference potential. The common reference potential serves as the "ground potential" while galvanically insulated from any external reference potential. The casings 212, 214, 216 further reduce electromagnetic interference (EMI), which might intentionally or incidentally influence circuits in the modules 202, 204, 208.

At least a fourth touch foil 220 encloses a sub-volume of the interior of the housing 102. The touch foil 220 is a resistive touch foil comprising a pair of an inner TCO foil 222 and an outer TCO foil 224. In a cost-effective variant, the TCO foils 222 and 224 are kept separate, in the absence of external force, by spacer dots between them. In a preferred variant, a gel layer 226 is arranged between the TCO foils 222 and 224. Each of the TCO foils 222 and 224 is flexible. The mechanical flexibility allows bending or rolling-up of the touch foil 220. When the touch foil 220 is in a bended or rolled-up configuration, the TCO foils 222 and 224 are at least locally curved. Preferably, the touch foil 220 is rolled-up once or twice, or overlaps with itself to any intermediate extent (i.e., the touch foil 220 is rolled-up more than once and less than twice).

A bending stiffness of the inner TCO foil 222 is higher than a bending stiffness of the outer TCO foil 224. Preferably, the bending stiffness of the inner TCO foil 222 is three to ten times greater than that of the outer TCO foil 224. Furthermore, the inner TCO foil 222 is stretchable. A foil is referred to as stretchable when the foil exhibits reversible expansibility. The outer TCO foil 224 cannot be reversibly expanded. Moreover, gel in the gel layer 226 is essentially incompressible. As a first effect of the expansibility, the outer TCO foil 222 stretches when the touch foil 220 is curved. The TCO foils 222 and 224 remain spaced apart by the incompressible gel layer 226 over the entire surface of the curved touch foil 220. In the manufacture of the device 100, a center portion 228 of the fourth touch foil 220 is curved, as shown in Fig. 2.

As a second effect of the expansibility, the outer TCO foil 222 stretches in response to local pressure applied to the fourth touch foil 220. The outer TCO foil 222 bulges into the gel layer 226 at the location of the pressure. The gel in the gel layer 226 is viscous. Furthermore, the gel of the gel layer 226 is locally displaceable. The bulge formed by the outer TCO foil 222 laterally displaces in the gel layer 226 a volume of the viscous gel corresponding to the bulge. The inner TCO foil 222 remains dimensionally stable due to its stiffness. The bulge of the outer TCO foil 224 contacts the inner TCO foil 222 in response to the local pressure. The contact indicates an intrusion. The viscosity of the gel is at least 1 Pa·s, preferably 2 to 10 Pa·s, in order to avoid a contact caused by the bending or rolling-up in the manufacture. The viscosity is below 300 Pa·s, preferably below 100 Pa·s, in order to detect an intrusion prior to local destruction of the outer TCO foil 222. The expansibility of the outer TCO foil 222 and the shear viscosity of the gel layer 226 are parameters that predetermine a threshold of local pressure. As an applied local pressure exceeds the threshold, the action at the outer TCO foil 222 is detected as an intrusion.

The module 202 comprises a controller 230 and a pattern generator 232. The controller 230 is connected to the inner TCO foil 222. The pattern generator 232 is connected to the outer TCO foil 224. The pattern generator 232 is adapted to provide an input signal representing a random pattern to the outer TCO foil 224. The controller 230 is adapted to sample an output signal provided by the inner TCO foil 222. In the presence of the contact between the TCO foils 222 and 224 caused by local pressure on the touch foil 220, the output signal depends on the location of the pressure acting on the touch foil 220. The controller is adapted to derive the location on the touch foil 220 as an indicator of an intrusion attempt at the location. The touch foil 220 correlates the input signal and the local action. The input signal is also provided inside the module 202 from the pattern generator 232 to the controller 230. For the derivation, the controller 230 comprises a decorrelator that decorrelates the output signal using the input signal.

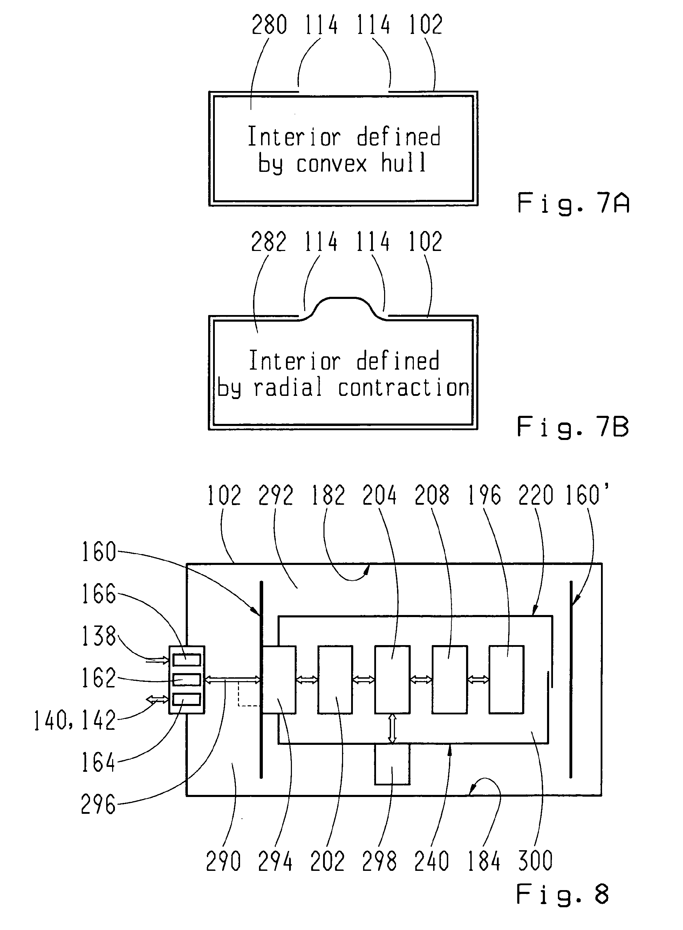

In a cost-effective variant, the shielding PCB 160 is only populated by electronic components on an inner side 161 of the shielding PCB 160. The inner side of the PCB 160 is opposite to the layer structure 170, 172, 174, 176 described above. In a preferred variant of the first embodiment of the device 100 shown in Fig. 2, the shielding PCB 160 further comprises a further layer structure on the inner side 161 of the substrate 168. The further layer structure is mirror-symmetric with respect to the substrate 168. Each of the shielding layers 170 is grounded. In an extended variant of the first embodiment of the device 100, a second shielding PCB 160' (shown in Fig. 8 described below) is arranged between the multilayer PCB 200 and the battery 196. The multilayer PCB 200 is shielded by at least one shielding layer 170 at each of the shielding PCBs 160 and 160'. The shielding PCB 160 suppresses EMI entering the device 100 at the front side. The shielding PCB 160 further prevents electromagnetic leakage through the front side of the device 100. The shielding PCB 160' suppresses EMI entering the device 100 at the back side. The shielding PCB 160' further prevents electromagnetic leakage through the back side of the device 100.

The inner side 161 is the side of the substrate 168 facing away from the housing 102. In other words, the inner side 161 is the side of the substrate 168 facing towards the multilayer PCB 200. In all variants, conducting paths or any other wiring at the shielding PCB 160 (and, where applicable, at the shielding PCB 160') are arranged on the inner side 161 of the substrate 168. In the preferred variant and the extended variant, the inner surface 161 is sandwiched between at least two grounded shielding layers 170.

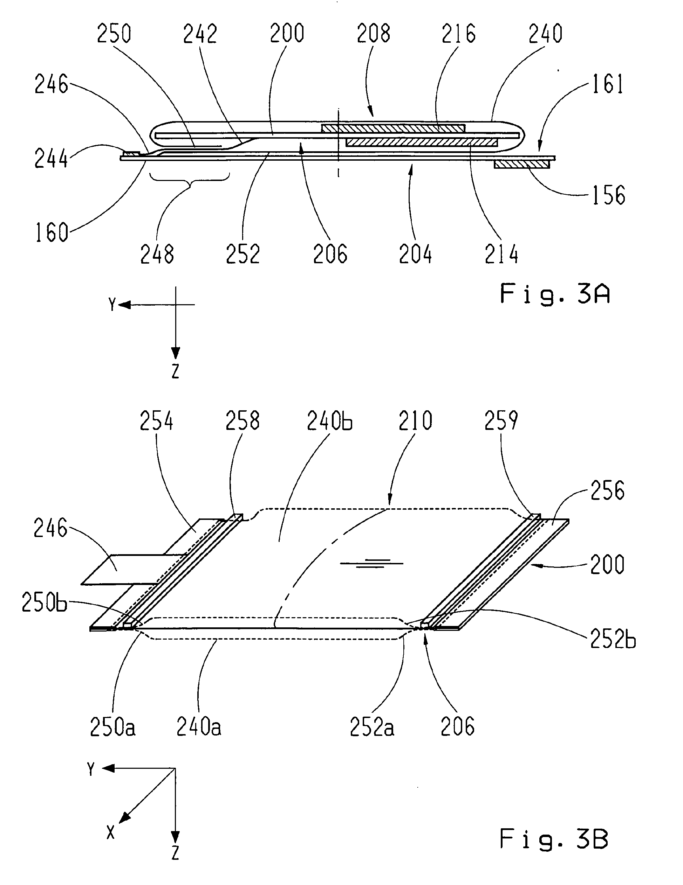

Fig. 3A schematically illustrates a cross-section along the vertical line indicated in Fig. 1. As throughout this disclosure, like reference signs refer to corresponding features, of which above description likewise applies. A vertical direction is inverted in Fig. 3A with respect to Fig. 2. A front of the device 100 is oriented to the bottom of Fig. 3A.

The fourth touch foil 220 is bend in a transverse direction of the device 100 denoted by X, as is shown in Fig. 2. A fifth touch foil 240 is rolled-up in a longitudinal direction of the device 100 denoted by Y, as is shown in Fig. 3A. A first flexible stripe connector 242 is arranged on the inner side 206 of the multilayer PCB 200. A second flexible stripe connector 244 is arranged on the inner side 161 of the shielding PCB 160. A flexible stripe 246 connects the first flexible stripe connector 242 and the second flexible stripe connector 244. The flexible stripe 246 comprises a plurality of conducting paths connecting the multilayer PCB 200 and the shielding PCB 160. The fifth touch foil 240 overlaps with itself in a region 248. The flexible stripe 246 is arranged between a first end portion 250 and a second end portion 252 of the fifth touch foil 240.

Fig. 3B is a perspective view of a further touch foil arrangement in accordance with a second embodiment of the device 100. The second embodiment of the device 100 comprises all features as described with reference to the first embodiment. Alternative or additional features are indicated by like reference signs in Fig. 3B. In addition to the fourth touch foil 220 curved in the direction denoted by X, a pair of touch foils 240a and 240b covers the front side 206 and the back side 210 of the multilayer PCB 200, respectively.

Top end portions 250a and 250b of the touch foils 240a and 240b are clamped to the front side 206 and the back side 210 of the multilayer PCB 200 by means of a first clamping bar 254, respectively. In a corresponding manner, bottom end portions 252a and 252b of the touch foils 240a and 240b are clamped at an opposite edge (i.e. the edge towards the bottom) of the multilayer PCB 200 by means of a second clamping bar 256, respectively.

In a preferred variant of the second embodiment of the device 100, a first foamed plastic bar 258 extends in the transverse direction (denoted by X) across the multilayer PCB 200 at its top end. The first foamed plastic bar 258 provides a constant pressure for electrical contact between the top end portion 250b and a contact bar extending in the transverse direction (i.e. parallel to X) on a back side 210 of the multilayer PCB 200 at its top end. Similarly, a second foamed plastic bar 259 extends in the transverse direction at the top end of the multilayer PCB 200 for contact between the bottom end portion 252b of the touch foil 240b and a second contacting bar on the back side 210 of the multilayer PCB 200.

At the top end portion of the multilayer PCB 200, a flexible stripe 246 extends in the longitudinal direction (denoted by Y) from the first clamping bar 254. The flexible stripe 246 is connected to a flexible stripe connector 244 at the shielding PCB 160 as described with reference to the first embodiment of the device 100.

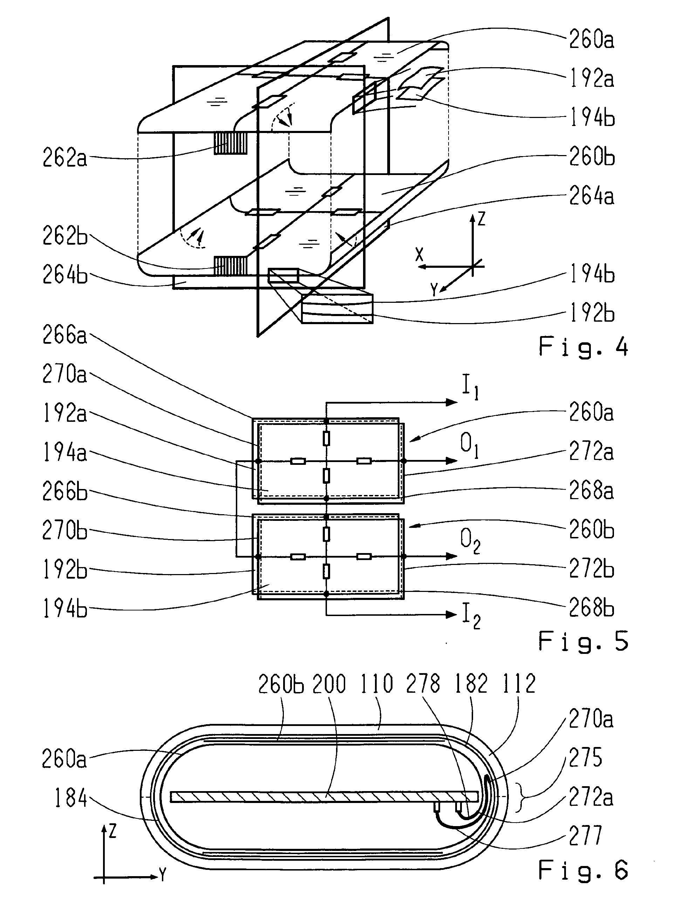

Fig. 4 schematically illustrates an exploded view of a pair of a sixth touch foil 260a and a seventh touch foil 260b. The touch foils 260a and 260b are arranged in the upper shell 110 and in the subshell 112, respectively. In an enhanced variant of each of the first embodiment and the second embodiment of the device 100, the touch foils 260a and 260b are located inside a volume surrounded by the layer structures 182 and 184. In a reduced variant of each of the first embodiment and the second embodiment of the device 100, the touch foils 260a and 260b replace the layer structure 182 and 184, respectively. In other words, in the reduced embodiment of the device 100, the second and third touch foils are omitted in favor of the sixth and seventh touch foils.

Each of the touch foils 260a and 260b is a resistive touch foil comprising a pair of TCO foils 192a, 194a and 192b, 194b, respectively, as described with reference to Fig. 2. Flat ribbon lines 262a and 262b extend from an edge of the touch foils 260a and 260b, respectively. The ribbon lines 262a and 262b are connected to the shielding PCB 160. The input and output signals are applied to and received from the touch foils 260a and 260b via the flexible stripe 246. In a variant described with reference to Fig. 6 below, the touch foils 260a and 260b are directly connected to the multilayer PCB 200.

The touch foil 260a covers the inner side 182 of the upper shell 110. The touch foil 260b covers the inner side 184 of the subshell 112. Each of the touch foils 260a and 260b is curved towards the interior of the housing 102. A local curvature of the touch foils 260a and 260b can be described by a second fundamental form. Eigenvalues and eigenvectors of the second fundamental form define principle curvatures and principle directions of curvature, respectively. In general, there is a maximum and a minimum value of (local) curvature. As used herein, the term principle curvature refers to the maximum value of the curvature.

A first plane 264a of principle curvature of the touch foil 260a and a second plane of principle curvature 264b of the touch foil 260b are indicated in Fig. 4. The touch foil 260a and the touch foil 260b are curved such that the first plane 264a of principle curvature is perpendicular to the second plane 264b of principle curvature.

As is shown in Fig. 4, surface areas of the sixth touch foil 260a and the seventh touch foil 260b are sized such that the touch foils 260a and 260b do essentially not overlap each other in the assembled state of the device 100.

In a first variant, the sixth touch foil 260a folds over in the longitudinal direction denoted by Y. A longitudinal dimension (or length) of the sixth touch foil 260a is wrapped around in the longitudinal direction. The longitudinal dimension of the sixth touch foil 260a is up to twice the longitudinal dimension of the sixth touch foil 260a shown in Fig. 4. The sixth touch foil 260a partially overlaps the seventh touch foil 260b. Similarly, the seventh touch foil 260b is wrapped around in the transverse direction denoted by X. A transverse dimension (or length) of the seventh touch foil 260b is up to twice the transverse dimension of the seventh touch foil 260b shown in Fig. 4. The seventh touch foil 260b partially overlaps the sixth touch foil 260a.

In a second variant, one or both of the sixth touch foil 260a and the seventh touch foil 260b has more than twice the length shown in Fig. 4. I.e. the dimensions of the touch foils 260a and 260b in the planes 264a and 264b of principle curvature, respectively, is curled up with a winding number greater than one. The corresponding one of the touch foils 260a and 260b overlaps with itself.

Fig. 5 shows a wiring of the touch foils 260a and 260b. An analogous wiring involve any one of the other touch foils of the device 100. Each of the first TCO foil 192a and second TCO foil 194a of the touch foil 260a has an approximately constant resistivity across its surface. A first contact bar 266a and a second contact bar 268a extend along opposite edges of the first TCO foil 192a. Similarly, a third contact bar 270a and a fourth contact bar 272a are provided at opposite edges of the second TCO foil 194a. The touch foil 260b has a corresponding structure including contact bars 266b, 268b, 270b and 272b. The third contact bar 270a of the touch foil 260a and the third contact bar 270b of the touch foil 260b are connected. The second contact bar 268a of the touch foil 260a and the first contact bar 266b of the touch foil 260b are connected. An input signal l₁-l₂ is applied at the first contact bar 266a of the touch foil 260a and the second contact bar 268b of the touch foil 260b. An output signal O₁-O₂ is tapped at the fourth contact bar 272a of the touch foil 260a and at the fourth contact bar 272b of the touch foil 260b.

The input signal l₁-l₂ is provided by the pattern generator 232 in the first module 202. The output signal O₁-O₂ is received by the controller 230 in the first module 202. The wiring of the touch foils 260a and 260b allows detecting an intrusion at any one of the touch foils 260a and 260b using the single controller 230. Such a wiring between two or more touch foils 260a and 260b is referred to as "series connection". It is not a conventional series connection of resistors, but a "two-dimensional" series connection due to the two independent connections 270a-270b and 268a-266b.

In a first variant of the wiring, all touch foils 220, 240, 260a and 260b of the device 100 are connected in series. In a second variant, a demultiplexer 274 is comprised in the first module 202. An input of the demultiplexer 274 is connected to the pattern generator 232. The demultiplexer 274 provides a plurality of outputs. Each of the plurality of outputs is connected to a respective one of the plurality of touch foils 220, 240, 260a and 260b of the device 100. The module 202 further comprises a multiplexer 276. An output of the multiplexer 276 is connected to the controller 230. The multiplexer 276 comprises a plurality of inputs. Each of the plurality of touch foils 220, 240, 260a and 260b is connected to a respective one of the plurality of inputs of the multiplexer 276. The demultiplexer 274 and the multiplexer 276 operate synchronously at a stochastic frequency. The stochastic frequency is in the range of 100 Hz to 10 kHz.

Fig. 6 shows further details of an arrangement of the touch foils 260a and 260b in a cross-section of along the directions Y and Z. In a vicinity 275 of the edges 178 and 180 in engagement, the touch foil 260a overlaps with itself according to the second variant described above with reference to Fig. 4. The contact bars 270a and 272a of the touch foil 260a are connected to the multilayer PCB 200 via a first line 277 and a second line 278, respectively. The multilayer PCB 200 and the touch foil 260a are connected such that all connection lines 277 and 278 are inside a volume enclosed by the touch foil 260a and the touch foil 260b. The fourth contact bar 272a is at an inner end of the curled-up touch foil 260a. The fourth contact bar 272a is thus inside the enclosed volume. For connecting the third contact bar 270a to the multilayer PCB 200, the line 277 is S-shaped and passes through the overlapping end portions of the touch foil 260a. A similar arrangement applies to the touch foil 260b. The connectivity described for the vicinity 275 can also be applied to the section 248 for connecting the touch foils 220 and 240 to the multilayer PCB 200.

The plurality of touch foils arranged in the device allows monitoring an interior of the housing 102. The sixth touch foil 260a at the inner side of the upper shell 110 of the housing 102 may cover a back side of the touchscreen 120. Alternatively or in addition, the touchscreen comprises a further touch foil, which functions to receive the user input on the matrix 146 and to monitor the interior. To this end, the further touch foil of the touchscreen 120 is connected to one of the plurality of outputs of the demultiplexer 274 and to one of the plurality of inputs of the multiplexer 276. In the on-state of the device 100, the touchscreen 120 thus provides an output signal interpreted as the user input. In the off-state of the device 100, the touchscreen 120 provides the output signal as part of the monitoring of the interior.

In the on-state, the module 202 decides whether the output signal of the touchscreen 120 indicates a user input or an intrusion. When the location of the action at the sensitive surface of the touchscreen 120 does not vary for a predefined period of time, the action is interpreted as an intrusion. The predefined time may be 15 seconds or longer. A preferred time threshold is 60 seconds. In addition, when the output signal indicates an action covering more than 50% of the sensitive surface of the touchscreen 120, the action is interpreted as an intrusion. The action covering more than 50% of the sensitive surface of the (capacitive) touchscreen 120 can indicate removal or shattering of a glass cover of the touchscreen 120. As a contraindication, a time-dependent and/or line-shaped action along the sensitive surface of the touchscreen 120 is interpreted as a user input.

Figs. 7A and 7B schematically illustrate the monitored interior of the housing 102. The interior 280 monitored in a first variant shown in Fig. 7A can be defined as the convex hull of an inner side of the housing 102. The interior 280 is monitored the sixth touch foil 260a and the seventh touch foil 260b.

Fig. 7B shows a further interior 282 monitored in a second variant. The interior 282 may be defined as a volume radially contractable to a center in the housing 102. The interior 282 is monitored by multiplexing the output signals of the touchscreen 120 located in the first opening 114 of the housing 102 and of the touch foils 206a and 206b.

Fig. 8 schematically illustrates zones in the housing 102 in accordance with the embodiments of the device 100 described above. A first public zone 290 is enclosed by the housing 102. The security against intrusion in the public zone 290 is based on at least the mechanical resistance provided by the vault-like structure of the housing 102.

At a next higher level of protection in a shielded zone 292, at least one or more shielding layers, including the shielding layer 170 in each of the shielding PCBs 160 and 160', effectively suppress EMI. In other words, the volume of the shielded zone 292 is electromagnetically decoupled from the outside (in both directions). Data access to the shielding zone 192 is controlled by an access controller 294. The access controller 294 is adapted to disable a connection 296 between one of the interfaces 162, 164, 166 and the access controller 294. The connection 296 is disabled by at least one of interrupting one or all galvanic connection lines of the connections 296 and grounding one or all of the connection lines of the connection 296. The connection 296 is always disabled in the off-state of the device 100. The access controller 294 is further adapted to analyze data transmitted via the connection 296. The analysis includes assigning a type out of a plurality of predefined types to each data packet received via the connection 296. The access controller 294 further comprises a table of data value limits assigned to each of the plurality of data types. The access controller 294 disables the connection 296 in case a data value included in the received data packet exceeds one of the data value limits assigned to its type.

The highest level of security is realized in a security zone 300. In the security zone 300, an intrusion detection is provided by at least the plurality of touch foils, such as the touch foils 220 and 240. The security zone 300 comprises the multilayer PCB 200 and the modules 202, 204, 208 thereon. In the variant illustrated in Fig. 8, the battery 196 is also included in the security zone 300. A signal generator 298 is located outside the security zone 300. The signal generator 298 is arranged directly at a boundary of the security zone 300 and powered from inside the security zone 300. The first module 202 is adapted to directly (or indirectly via the second module 204) trigger the signal generator 298 in response to an intrusion detected by the controller 230. The signal generator 298 outputs an acoustic alert. The acoustic alert is continuously powered until the user input is identified as an allowable passphrase. In the absence of a successful user input, after a predefined period of acoustic alert, the first module 202 triggers a sequential self-destruction of all modules 208, 204, 202.

As has become apparent from the above embodiments of a device for intrusion detection, some or all embodiments may detect an intrusion even if an attacker carefully selects a location for the intrusion or tries to circumvent intrusion detection by short-cutting or step-by-step disassembling of such a device. Unauthorized access to data, such as a key or digital signature, or to logic, such as an encryption logic or specific processing capability, may be prevented by the emission of warning signals or self-destruction of some or all modules in the case of intrusion detection. Some features of the embodiments can be omitted without sacrificing all advantageous of the device. For example, one or more of the seven touch foils described above may be omitted.

While the current invention has been described in relation to its preferred embodiments, it is to be understood that above description is for illustrative purposes only. Accordingly, it is intended that the invention be limited only by the scope of the claims appended hereto.

## Claims

1. Device (100) for intrusion detection, comprising:
- a housing (102) having an interior (280; 282);
- a controller (230) located in the interior; and
- one or more foils (220; 240; 260a, 260b), each of which includes a surface sensitive to a local action at the sensitive surface, the one or more sensitive surfaces at least partially enclosing a volume in the interior, wherein each of the one or more foils is coupled to the controller and configured to output a signal that depends on a location of the action at the respective sensitive surface.

2. The device of claim 1, wherein the output signal varies essentially continuously with the location of the action.

3. The device of claim 1 or 2, wherein the output signal changes upon at least one of approach and contact with one of the one or more sensitive surfaces.

4. The device of any one of the preceding claims, wherein the one or more sensitive surfaces cover an inner surface (182; 184) of the housing.

5. The device of any one of the preceding claims, wherein the enclosed volume is completely enclosed by the one or more sensitive surfaces.

6. The device of any one of the preceding claims, wherein the device further comprises a power supply (196) arranged in the interior, the power supply providing an autonomous source of power to the controller.

7. The device of any one of the preceding claims, wherein the device further comprises a touchpad (120) and a multiplexer (276) adapted to multiplex a first input and a second input to an output, and wherein the controller is coupled to the output of the multiplexer, the touchpad is coupled to the first input of the multiplexer and each of the one or more foils is coupled to the controller via the second input of the multiplexer.

8. The device of any one of the preceding claims, wherein the device further comprises a pattern generator (232) and the one or more foils are coupled to the pattern generator.

9. The device of any one of the preceding claims, wherein the one or more foils include a first foil (260a) having a first plane (264a) of principal curvature and a second foil (260b) having a second plane (264b) of principal curvature perpendicular to the first plane.

10. The device of any one of the preceding claims, wherein the device further comprises a first Printed Circuit Board (160), or first PCB, and a second PCB (160') arranged parallel to the first PBC, each of the PCBs having an outer side facing the housing and an inner side facing the other PCB, wherein the outer sides are essentially unpopulated and at least one of the inner sides is populated.

11. The device of claim 10, wherein at least one of the outer sides comprises at least one of a shielding layer (170) and a touch foil (174, 176).

12. The device of any one of the preceding claims, wherein the device further comprises one or more electronic components (230, 232, 274, 276), and wherein the controller is adapted to alter at least one of the electronic components in response to the output signal indicating an intrusion.

13. The device of claim 12, wherein at least one of the electronic components is located inside the enclosed volume.

14. The device of any one of the preceding claims, wherein the device further comprising a shielding layer (170; 188a; 188b) between the housing and the one or more foils.

15. The device of any one of the preceding claims, wherein the device comprises in the interior at least one module (202; 204; 208), which is a further device according any one of the preceding claims.
